Europäisches Patentamt

European Patent Office

Office européen des brevets

(11) Veröffentlichungsnummer: **0 441 246 A1**

## EUROPÄISCHE PATENTANMELDUNG

(21) Anmeldenummer: 91101281.3

(22) Anmeldetag: 31.01.91

(51) Int. Cl.⁵: **B60B 33/00**

(30) Priorität: 05.02.90 DE 9001283 U

(43) Veröffentlichungstag der Anmeldung:
14.08.91 Patentblatt 91/33

(84) Benannte Vertragsstaaten:
CH DE ES FR GB IT LI NL SE

(71) Anmelder: AS ROLLEN GMBH
Industriestrasse 47 a
W-5609 Hückeswagen(DE)

(72) Erfinder: Schulte, Arnolf
Friedenstrasse 8c
W-5632 Wermelskirchen 1(DE)

(74) Vertreter: Kohlmann, Karl Friedrich, Dipl.-Ing.
et al
Hoffmann, Eitle & Partner Arabellastrasse 4
(Sternhaus)
W-8000 München 81(DE)

(54) Laufrolle, insbesondere Lenkrolle, für Möbel, Apparate oder dergleichen.

(57) Um bei einer Laufrolle (1), insbesondere einer Lenkrolle für Möbel, Apparate und dergleichen, welche ausgestattet ist
- mit zwei Tragarmen (2, 3),
  die als Drahtbiegeteile ausgebildet sind, an deren freien Enden (4, 5) eine Radachse (6) für zumindest ein Rad (7) gehaltert ist, und die über ein Verbindungsteil (8) miteinander verbunden sind, und
- mit einem Joch (9),
  das das Verbindungsteil (8) der Tragarme (2, 3) aufnimmt, und das mit einem Tragzapfen (10) verbunden ist,

derart weiterzubilden, daß bei einfachem, kostengünstig und leicht zu montierenden Aufbau neben dem Verbindungsteil ein Kopflager zur drehbeweglichen Lagerung des Tragzapfens im Joch angeordnet werden kann, ist erfindungsgemäß das Joch (9) mit einem Lagertopf (11) und einem Lagerdeckel (12) ausgestattet, die einen Aufnahmehohlraum (13) für ein Kopflager (14) zur drehbeweglichen Lagerung des Tragzapfens (10) begrenzen.

Fig. 1

# LAUFROLLE, INSBESONDERE LENKROLLE, FÜR MÖBEL, APPARATE ODER DERGLEICHEN

Die Erfindung betrifft eine Laufrolle, insbesondere eine Lenkrolle für Möbel, Apparate o.dgl., nach dem Oberbegriff des Anspruches 1.

Eine derartige Laufrolle ist aus der US-PS 2 987 752 bekannt. Bei dieser bekannten Laufrolle ist das Verbindungsteil der Tragarme auf einer Befestigungsplatte des Joches so angeordnet, daß ein Flansch des Joches das Verbindungsteil starr umfaßt. Ferner ist der Tragzapfen der bekannten Laufrolle fest mit der Befestigungsplatte des Joches verbunden.

Es ist demgegenüber Aufgabe der vorliegenden Erfindung, eine Laufrolle der im Oberbegriff des Anspruches 1 angegebenen Art derart weiterzubilden, daß bei einfachem, kostengünstig und leicht zu montierendem Aufbau neben dem Verbindungsteil ein Kopflager zur drehbeweglichen Lagerung des Tragzapfens im Joch angeordnet werden kann.

Die Lösung dieser Aufgabe erfolgt durch die Merkmale des Anspruches 1.

Dadurch wird erreicht, daß ein Kopflager auf einfache Art und Weise mit geringem Montageaufwand in die Laufrolle integriert werden kann.

Hierbei kann das Kopflager auf einfache Art und Weise vollständig gekapselt werden, denn es ist möglich, den Aufnahmeraum vollständig geschlossen auszubilden. Sollte es erforderlich sein, für Feststeller oder ähnliches Öffnungen vorzusehen, können diese mit geringem Aufwand abgedichtet werden.

Die Ausführung der Laufrolle als Drahtbiegekonstruktion ergibt den Vorteil, daß das Sauberhalten der Laufrolle im Einsatz wesentlich erleichtert wird, da keine bzw. nur sehr wenige, von außen schlecht erreichbare Teile vorhanden sind. Dies ist insbesondere dann von Vorteil, wenn die Laufrolle in Bereichen eingesetzt werden soll, in denen hohe Hygieneanforderungen gestellt werden.

Ferner ermöglicht die erfindungsgemäße Ausbildung der Laufrolle bei der bevorzugten Verwendung von Gleit- oder Wälzlagern, wie Nadellagern, Rillenkugellagern oder ähnlichem, vor Montagebeginn die Anbringung verschiedener Schutzüberzüge, so daß eine gute Resistenz gegenüber korrosiven Medien ohne Verwendung von rostfreien Stählen erreicht werden kann.

Als weiterer Vorteil ist hervorzuheben, daß sich die Montage erheblich vereinfacht, da bei der Endmontage bevorzugterweise nur ein Bördelvorgang notwendig ist. Als Alternative zum Bördeln wäre es grundsätzlich auch möglich, bie der Endmontage zu nieten, zu schrauben, zu schweißen oder zu kleben.

Neben ihren rein technisch bedingten Vorteilen ergibt sich bei der erfindungsgemäßen Laufrolle überdies eine optisch sehr ansprechende Konstruktion, da lediglich ein Minimum an sichtbaren Teilen vorhanden ist, so daß die erfindungsgemäße Laufrolle mit einer Vielzahl unterschiedlicher Geräte harmoniert, an denen sie eingesetzt werden kann.

Schließlich ergibt sich außerdem die Möglichkeit, durch die erfindungsgemäße Kombination von Draht- und Kopflagerelementen auch Befestigungs- und Betätigungselemente für Feststellteile zu integrieren.

Die Ansprüche 2 bis 10 haben vorteilhafte Weiterbildungen der Erfindung zum Gegenstand.

Durch die kreisringförmige, jedoch nicht vollständig geschlossen ausgeführte Ausbildung des Verbindungsteiles ergibt sich die Möglichkeit, das Kopflager innerhalb des Aufnahmehohlraumes zusätzlich zu umgeben, so daß das Verbindungsteil und das Kopflager fest im Aufnahmehohlraum gehaltert sind.

Die Anbringung einer zentrischen Ausnehmung in einem oberen Absatz des Lagertopfes ergibt die Möglichkeit, ein Schaftteil des Tragzapfens aufzunehmen, an dem bei einer weiteren bevorzugten Ausführungsform ein Lagerelement angebracht werden kann, das mit dem Kopflager zur drehbeweglichen Lagerung des Tragzapfens zusammenwirkt.

Um das Eindringen von Schmutz oder ähnlichem zu verhindern, kann der Spalt zwischen dem Schaftteil und dem Innenrand der Ausnehmung mit Hilfe eines Dichtringes abgedeckt sein.

Das Vorsehen eines Halteabschnittes ergibt eine besonders einfache Festlegungsmöglichkeit für den Lagerdeckel, da es beispielsweise möglich ist, den Halteabschnitt im Zuge der Endmontage umzubördeln und damit den Lagerdeckel zur Festlegung des Kopflagers und des Verbindungsteile zu fixieren.

Die Fixierung des Verbindungsteiles wird dadurch unterstützt, daß der Lagerdeckel einen Randabschnitt aufweist, der zwischen dem Halteabschnitt des Lagerzapfens und dem Verbindungsteil angeordnet ist. Bei einer besonders bevorzugten Ausführungsform ist dieser Randabschnitt an die Außenkontur des Verbindungsteiles angepaßt, das üblicherweise einen kreisförmigen Querschnitt aufweist.

Weist der Lagerdeckel eine konzentrisch zur Lagerachse des Tragzapfens angeordnete Durchgriffsausnehmung aus, ist es möglich, auf besonders einfache Art und Weise einen Feststeller in die erfindungsgemäße Laufrolle zu integrieren. Hierzu kann beispielsweise ein blattfederartig ausgebildeter Bremshebel vorgesehen sein, der schwenkbeweglich um eine Bremshebelachse gelagert ist. Der Bremshebel kann hierbei mittels eines beispielsweise in der Radachse gelagerten Stellhebels betätigt werden, der einen Bremsbetätigungsarm und einen Bremslösearm aufweist. Durch die Durchgriffsausnehmung des Lagerdeckels kann ein Haltedorn des Bremshebels hindurchtreten, der beispielsweise mit einer Verzahnung oder einer Lochscheibe zur Blockierung der Schwenkbewegung des Rades der Laufrolle zusammenwirkt. Die Loch- oder Zahnscheibe kann hierbei am unteren Ende des Tragzapfens angeordnet werden.

Bei einer besonders bevorzugten Ausführungsform ist der Lagerdeckel mit einem Topfteil versehen, das wiederum eine Innenverzahnung aufweist, die mit einer Verzahnung eines Richtungsfeststellers zusammenwirkt. Durch die Ausnehmung des Topfteiles dieser Ausführungsform kann ein Bremszapfen hindurchtreten, der zur Hemmung der Drehbewegung des Rades in der Bremsstellung auf die Radoberfläche gedrückt wird.

Um die Zentrierung des Kopflagers innerhalb des Aufnahmehohlraumes zu verbessern, ist es bei einer besonders bevorzugten Ausführungsform möglich, ein Füllstück in einem Bereich des Kopflagers anzuordnen, das nicht vom Verbindungsteil umgeben ist. Das Füllstück wird hierbei zwischen diesem Bereich des Kopflagers und einer gegenüberliegenden Innenfläche des Lagertopfes angeordnet und stützt dadurch das Kopflager ab.

Besonders bevorzugte Ausführungsformen für das Kopflager sind Gleitlager oder Wälzlager. Ist das Kopflager als Gleitlager ausgebildet, kann es bei einer besonders bevorzugten Ausführungsform zweiteilig aufgebaut sein. Hierbei ist eine obere, auf der Seite des Lagertopfes angeordnete Lagerschale und eine untere, unmittelbar auf dem Lagerdeckel aufliegende Lagerplatte vorgesehen. Die Lagerschale und die Lagerplatte bilden hierbei einen Lagerraum. In den Lagerraum kann ein bei einer besonders bevorzugten Ausführungsform einstückig am Tragzapfen angeordnetes Gleitlagerteil angeordnet sein. Diese Ausführungsform ergibt den besonderen Vorteil, daß durch die vollständige Ausfüllung des Lagerraumes durch das Gleitlagerteil des Tragzapfens das Eindringen von Schmutzpartikeln in den Lagerbereich weitgehend verhindert werden kann, was bei der zuvor bereits erwähnten vorteilhaften Ausgestaltung unter Verwendung eines zusätzlichen Dichtringes noch verbessert wird.

Ist das Kopflager als Wälzlager ausgebildet, ergibt sich eine besonders vorteilhafte Weiterbildung durch eine Kombination mit einer gezahnten Scheibe, bei der eine Lagermittelschale mit einem Zapfen und der gezahnten Scheibe beispielweise vernietet werden kann.

Weitere Einzelheiten, Merkmale und Vorteile der Erfindung ergeben sich aus nachfolgender Beschreibung von Ausführungsbeispielen anhand der Zeichnung. Es zeigt:

Fig. 1 eine teilweise geschnittene Seitenansicht einer ersten Ausführungsform der erfindungsgemäßen Laufrolle,

Fig. 2 eine Ansicht aus Richtung des Pfeiles in Fig. 1,

Fig. 3 eine der Fig. 1 entsprechende Darstellung einer zweiten Ausführungsform,

Fig. 4 eine der Fig. 2 entsprechende Darstellung der Laufrolle gemäß Fig. 3,

Fig. 5 eine der Fig. 1 entsprechende Darstellung einer dritten Ausführungsform der erfindungsgemäßen Laufrolle in gebremstem und festgestelltem Zustand,

Fig. 6 eine der Fig. 5 entsprechende Darstellung einer vierten Ausführungsform der erfindungsgemäßen Laufrolle,

Fig. 7 eine der Fig. 1 entsprechende Darstellung einer fünften Ausführungsform der erfindungsgemäßen Laufrolle in ungebremstem Zustand, und

Fig. 8 die Laufrolle gemäß Fig. 7 in gebremstem und festgestelltem Zustand.

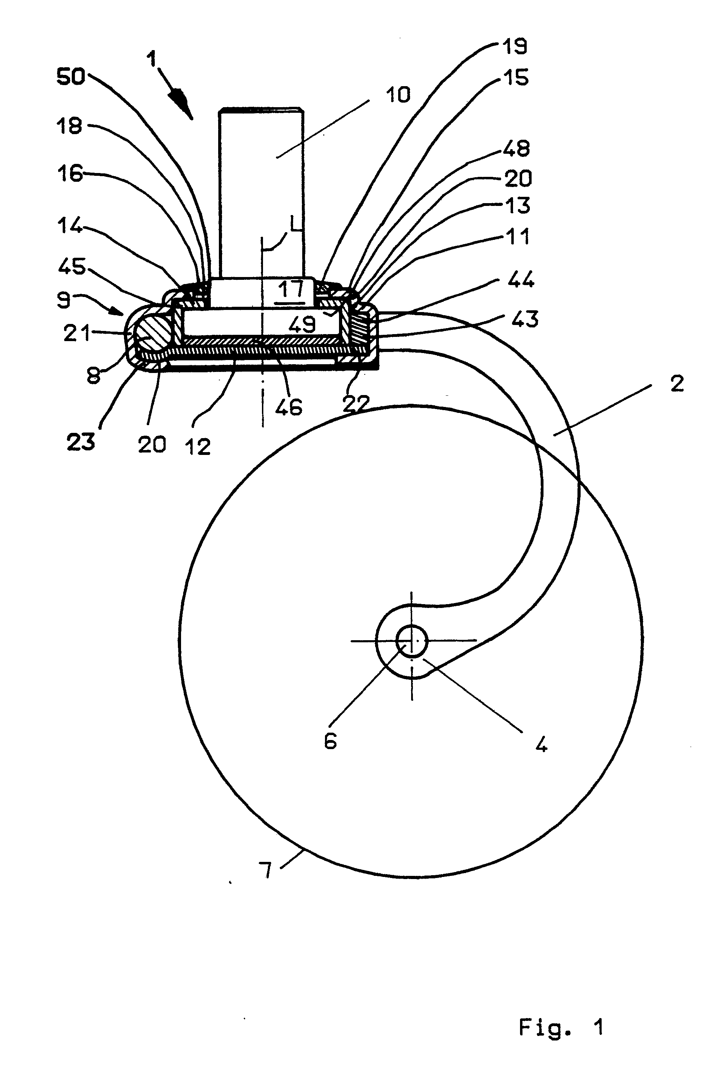

Bei den in den Fig. 1 bis 8 dargestellten unterschiedlichen Ausführungsformen sind die Basisteile, die bei allen Ausführungsformen identisch ausgebildet sind, mit den gleichen Bezugszeichen versehen.

Demgemäß weist die Laufrolle 1 zwei Tragarme 2 und 3 auf, die als Drahtbiegeteile ausgebildet sind und an deren freien Enden 4, 5 eine Radachse 6 für zumindest ein in den Figuren leicht vereinfacht dargestelltes Rad 7 gehaltert ist.

Die Tragarme 2, 3 sind über ein Verbindungsteil 8 vorzugsweise einstückig miteinander verbunden. Es ist somit möglich, die Tragarme 2, 3 und das Verbindungsteil 8 als eine einstückige Drahtbiegekonstruktion auszubilden, die elastisch leicht federnd ist und auf sehr einfache und kostengünstige Art und Weise hergestellt werden kann. Eine besonders bevorzugte Ausführungsform des Verbindungsteiles 8 besteht hierbei in einer im wesentlichen halbkreisförmigen offenen Ringausbildung.

Die erfindungsgemäße Laufrolle 1 weist ferner bei allen Ausführungsformen ein Joch 9 auf. Das Joch 9 nimmt das Verbindungsteil 8 der Tragarme 2 und 3 auf und ist mit einem Tragzapfen 10 verbunden.

Gemäß vorliegender Erfindung weist das Joch 9 einen Lagertopf 11 und einen Lagerdeckel 12 auf. Der Lagertopf 11 und der Lagerdeckel 12 begrenzen in ihrem Endmontagezustand einen Aufnahmehohlraum 13 für ein Kopflager 14, mit Hilfe dessen der Tragzapfen 10 drehbeweglich gegenüber dem feststehenden Joch 9 gelagert werden kann.

Bei allen Ausführungsformen weist der Lagertopf 11 einen im Einbauzustand oberen Absatz 15 auf. In dem Absatz 15, der haubenähnlich ausgebildet ist, ist konzentrisch zur Längsmittelachse L des Tragzapfens 10 eine Ausnehmung 16 angeordnet. Durch die Ausnehmung 16 erstreckt sich ein in den Fig. 1 bis 5 sichtbares Schaftteil 17 des Tragzapfens 10. Das Schaftteil 17 weist hierbei einen größeren Außendurchmesser auf als der darüber angeordnete Teil des Tragzapfens 10.

Die Innenabmessung der Ausnehmung 16 ist so groß, daß zwischen dem Innenrand der Ausnehmung 16 und dem Außenumfang des Schaftteiles 17 ein Spalt 18 verbleibt. Dieser Spalt kann bei den besonders bevorzugten Ausführungsformen der erfindungsgemäßen Laufrolle 1 von einem Dichtring 19 abgedeckt werden, so daß der Spalt 18 völlig geschlossen ist, um das Eindringen von Schmutz oder ähnlichem in den Aufnahmehohlraum 13 und den Lagerbereich zu verhindern.

Der Lagertopf 11 weist ferner einen dem Absatz 15 gegenüberliegenden Halteabschnitt 20 auf, der im Einbauzustand unterhalb des Absatzes 15 angeordnet ist, wie sich beispielsweise aus der Darstellung in Fig. 1 ergibt. Der Halteabschnitt 20 ist hierbei über einen Mittelabschnitt 21 mit dem Absatz 15 vorzugsweise einstückig verbunden, wobei sich der Mittelabschnitt 21 im Endmontagezustand eng an das Verbindungsteil 8 anschmiegt.

Wie die Figuren verdeutlichen, legt der Halteabschnitt 20 im Endmontagezustand den Lagerdeckel 12 fest. Hierzu hintergreift bzw. untergreift der Halteabschnitt 20 einen umlaufenden Randabschnitt 22 des Lagerdeckels 12.

Die Fig. 1 bis 6 verdeutlichen ferner, daß ein Teil 23 des Randabschnittes 22 des Lagerdeckels 12 zwischen dem Halteabschnitt 20 des Lagertopfes 11 und dem Verbindungsteil 8 angeordnet ist. Der Teil 23 des Randabschnittes 22 ist hierbei an die Außenkontur des Verbindungsteiles 8 angepaßt, wobei er bei den Ausführungsformen gemäß den Fig. 1 bis 4 zudem noch leicht nach unten abgebogen ist und an die Innenkontur des Halteabschnittes 20 angepaßt ist, so daß ein satter Sitz zwischen dem Halteabschnitt 20, dem Teil 23 des Randabschnittes 22 und dem Verbindungsteil 8 geschaffen wird.

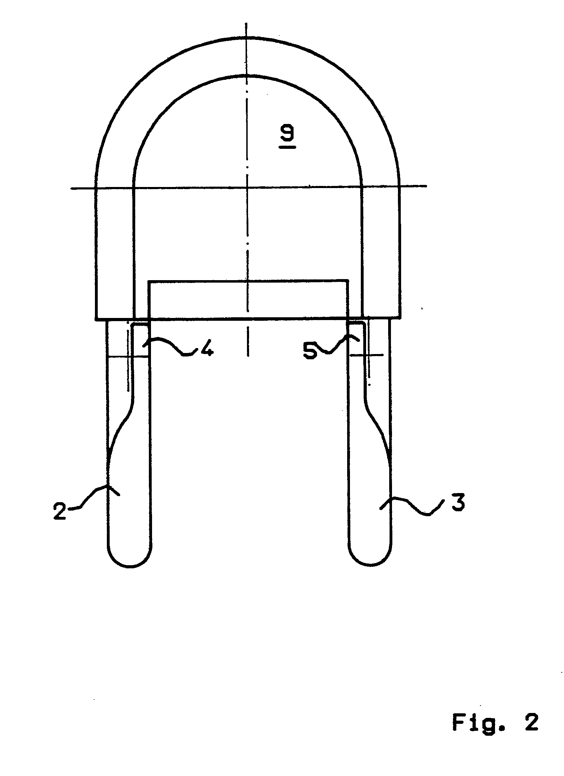

Die Figuren verdeutlichen ferner, daß der Lagerdeckel 12 unterschiedlich ausgebildet sein kann. Bei der Ausführungsform gemäß den Fig. 1 und 2 ist der Lagerdeckel 12 eine vollflächige Platte, so daß im Endmontagezustand der Aufnahmehohlraum 13 geschlossen ist.

Bei allen anderen Ausführungsformen jedoch weist der Lagerdeckel 12 eine konzentrisch zur Längsachse L des Tragzapfens 10 angeordnete Durchgriffsausnehmung 24 auf. Insgesamt ist der Lagerdeckel 12 bei den Ausführungsformen gemäß den Fig. 1 bis 6 als eine im wesentlichen ebene Platte ausgebildet.

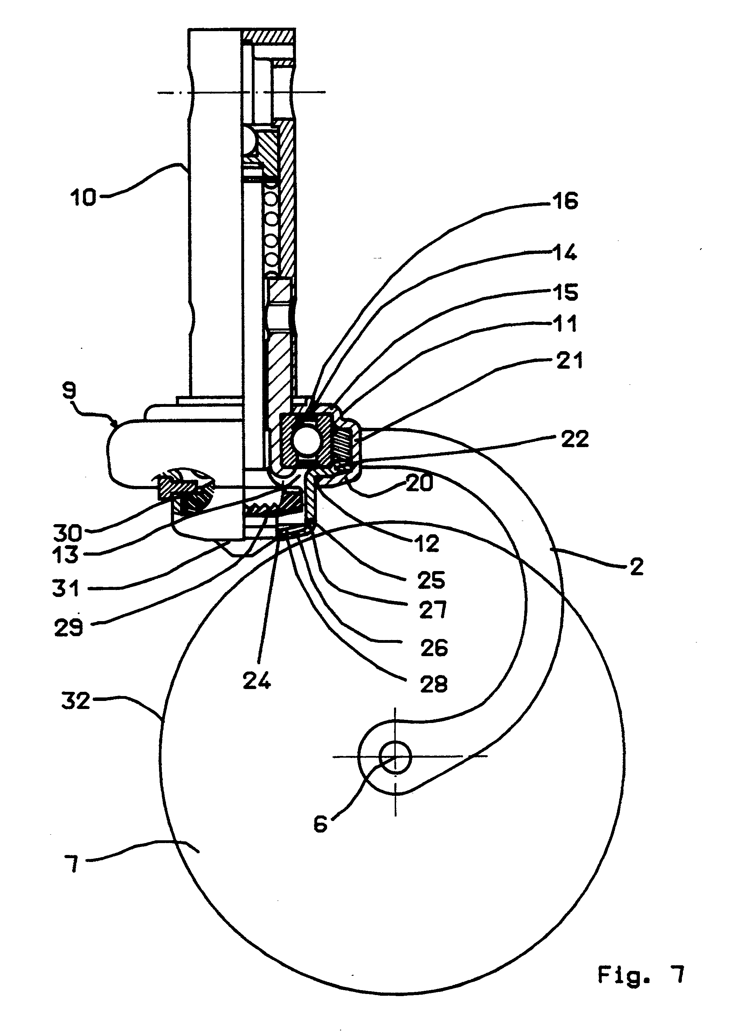

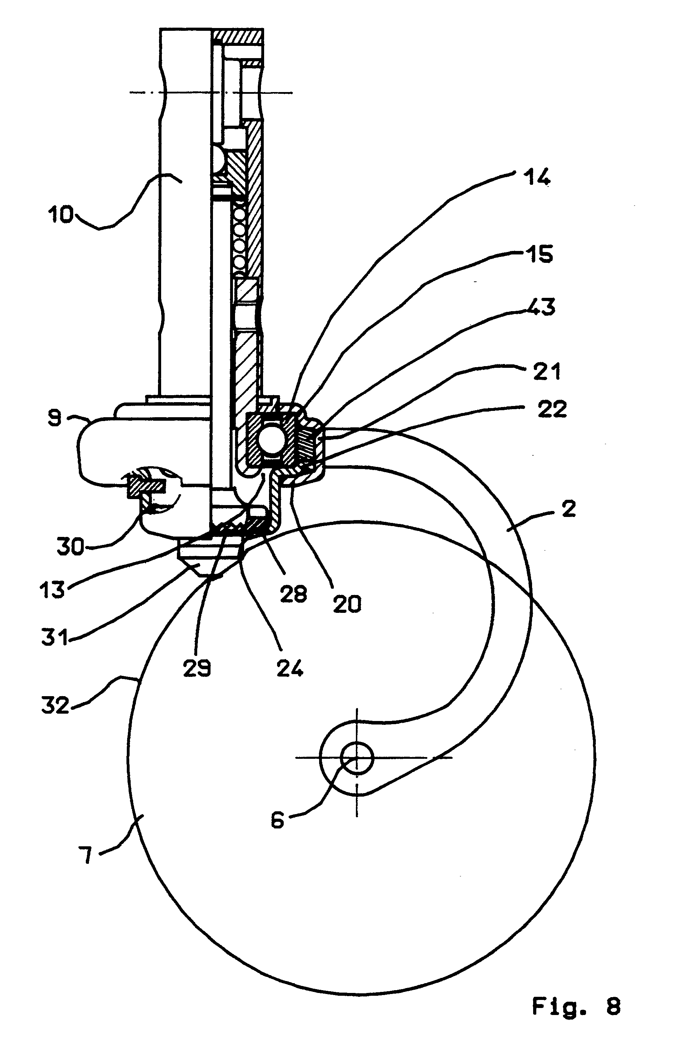

Demgegenüber weist der Lagerdeckel 12 gemäß der Ausführungsform nach den Fig. 7 und 8 ein Topfteil 25 auf, das einstückig oder aus mehreren Teilen aufgebaut sein kann. Diese Teile können durch Schweißen, Bördeln, Kleben oder durch ähnliche Verfahren verdrehfest mit dem Lagerdeckel 12 verbunden sein und sich im Einbauzustand nach unten in Richtung auf die Radachse 6 zu erstrecken. Das Topfteil 25 besitzt einen umgebogenen Rand 26, der im wesentlichen horizontal ausgebildet sein kann. Bei der in den Fig. 7 und 8 dargestellten Ausführungsform ist der Rand 26 in einem leicht stumpfen Winkel zum Topfteil 25 geneigt.

Bei dieser Ausführungsform ist die Durchgriffsausnehmung 24 im Rand 26 des Topfteiles 25 angeordnet. Ferner ist auf der Innenseite 27 des Randes 26 eine Verzahnung 28 angeordnet, die mit einer Gegenverzahnung 29 eines Richtungsfeststellers 30 zusammenwirken kann. Der Richtungsfeststeller 30 weist ferner einen Bremsstift 31 auf, der bei Betätigung des Richtungsfeststellers 30 auf die Radoberfläche 32 gedrückt wird, und dadurch die Drehbewegung des Rades 7 hemmt. In diesem in Fig. 8 dargestellten Betätigungszustand befinden sich ferner die Verzahnungen 28 und 29 im Eingriff, so daß die Schwenkbewegung des Tragzapfens 10 und damit des Rades 7 blockiert wird.

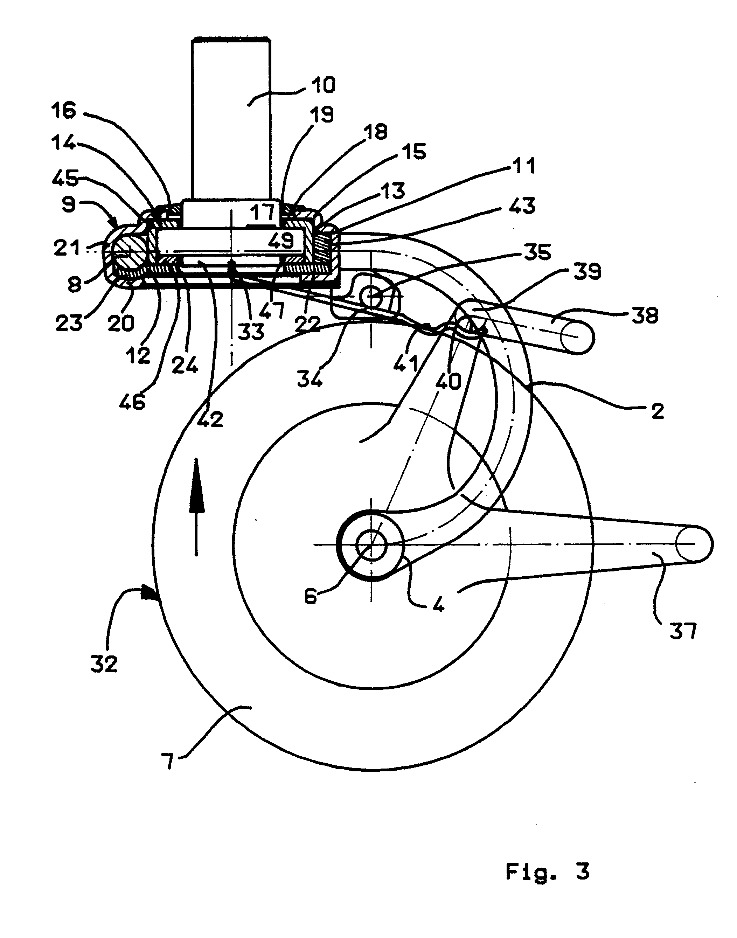

Bei den Ausführungsformen gemäß den Fig. 3 bis 6 ermöglicht die Durchgriffsausnehmung 24 das Hindurchtreten eines Stiftes 33 eines schwenkbeweglich gelagerten Bremshebels 34. Der Bremshebel 34 ist hierbei um eine außerhalb der Radoberfläche 32 angeordnete Drehachse 35 gelagert. Der Bremshebel 34 kann mittels eines Stellhebels 36 betätigt werden, der einen Bremsbetätigungsarm 37 und einen Bremslösearm 38 aufweist. Am Stellhebel 36 ist ferner eine Nockenanordnung 39 vorgesehen, die mit zwei Mulden 40 und 41 des Bremshebels 34 zusammenwirkt, so daß der Bremshebel 34 durch Federkraft in eine die Drehbewegung des Rades 7 nicht hemmende Freigabestellung vorbelastet ist, und durch die Nockenanordnung 39 in eine die Drehbewegung des Rades hemmende Bremsstellung entgegen der Federkraft überführbar ist. In dieser Bremsstellung greift gleichzeitig der Stift 33 in Ausnehmungen einer Lochscheibe 42 ein, die an der Unterseite des Tragzapfens 10 angeordnet ist.

Wiederum bei allen Ausführungsformen der erfindungsgemäßen Laufrolle 1 ist ein Füllstück 43 vorgesehen. Die Figuren verdeutlichen hierbei, daß das Füllstück 43 in dem Bereich des Aufnahmehohlraumes 13 angeordnet ist, in dem das Kopflager 14 nicht vom Verbindungsteil 8 umgeben ist. Hieraus ergibt sich ferner, daß durch die erfindungsgemäße Ausbildung des Joches 9, das aus dem Lagertopf 11 und dem Lagerdeckel 12 besteht, neben dem Aufnahmehohlraum 13 für das Kopflager 14 selbst natürlich auch Aufnahmehohlräume für das Verbindungsteil 8 und das zuvor genannte Füllstück 43 gebildet werden. Diese Aufnahmehohlräume sind vor dem Anordnen des Kopflagers 14 und des Füllstückes 43 alle miteinander verbunden und bilden mit anderen Worten einen einzigen Hohlraum, dessen Unterteilung in die zuvor genannten Einzelhohlräume durch die Anordnung der zuvor genannten Komponenten, nämlich des Verbindungsteiles 8, des Kopflagers 14 und des Füllstückes 43 resultiert.

Die Figuren verdeutlichen hierbei, daß das Füllstück 43 sowohl an dem entsprechenden Außenbereich des Kopflagers 14 als auch an dem gegenüberliegenden Innenwandbereich 44 des Topfteiles 11 anliegt, woraus eine vollständige Ausfüllung des entsprechenden vor Anordnung des Füllstückes 43 noch frei gebliebenen Teilraumes resultiert.

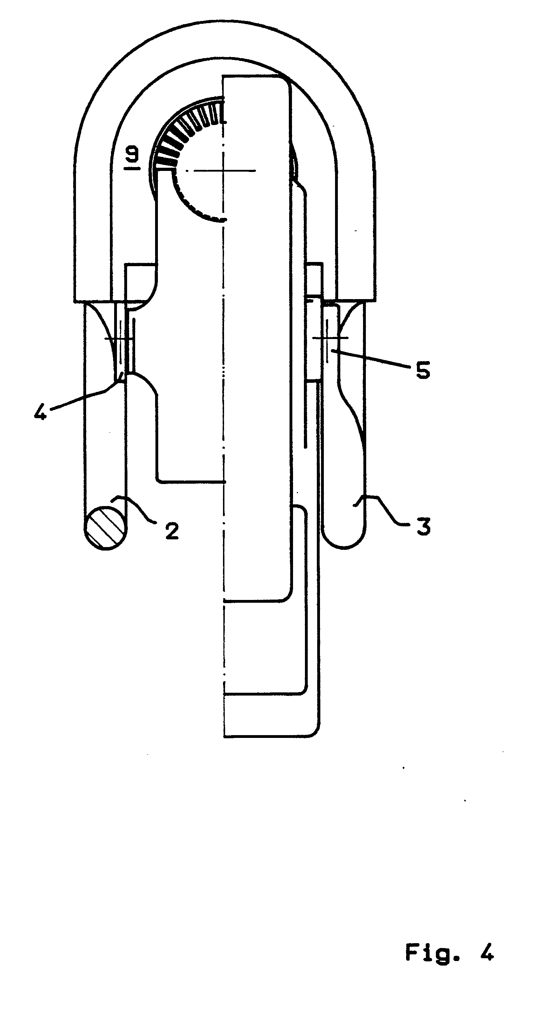

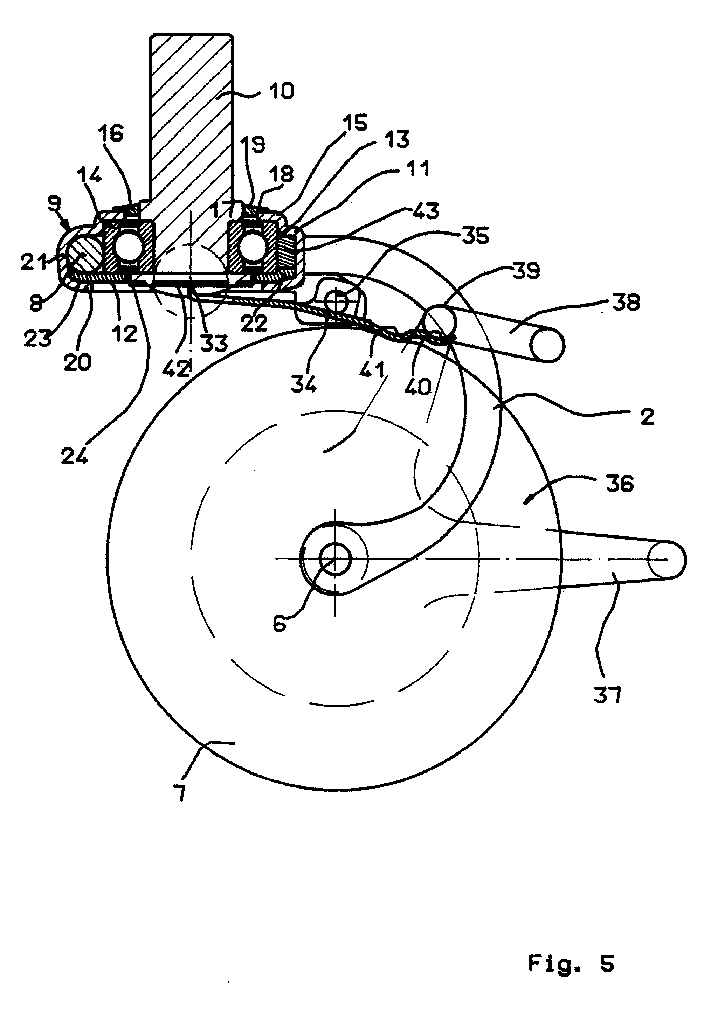

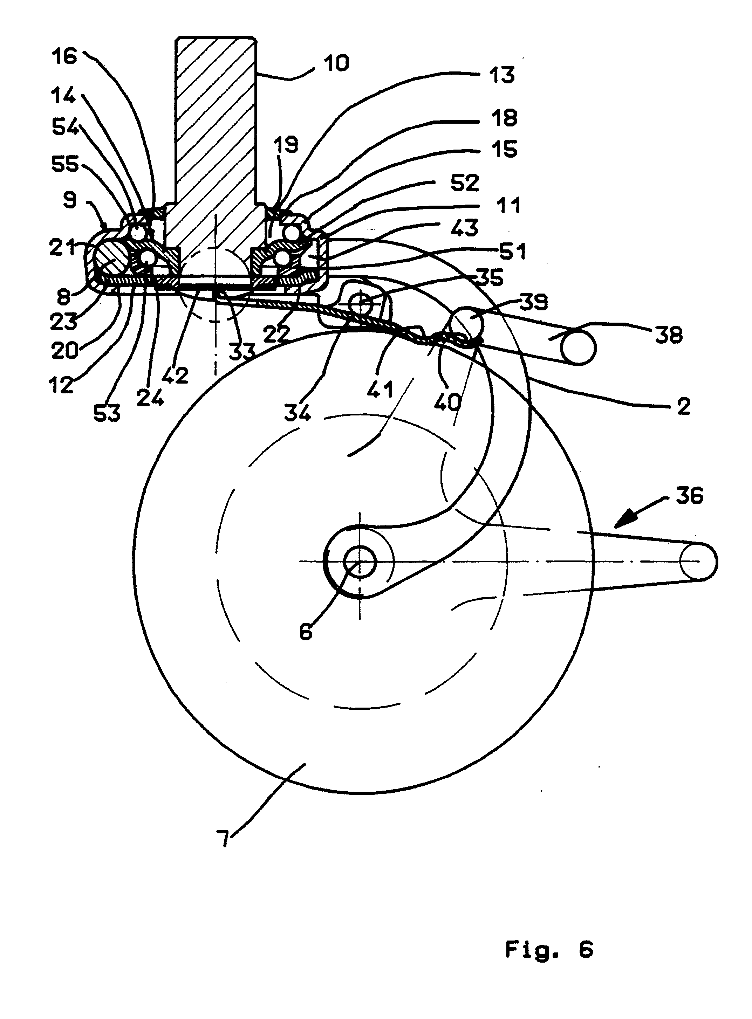

Bei den Ausführungsformen gemäß den Fig. 1 bis 8 sind ferner unterschiedlich ausgebildete Kopflager 14 vorgesehen. Hierbei sind die Kopflager 14 der Ausführungsformen gemäß den Fig. 1 bis 4 als Gleitlager ausgebildet. Diese Gleitlager weisen jeweils eine im Einbauzustand obere Lagerschale 45 und eine im Einbauzustand untere Lagerplatte 46 auf. Die Lagerplatte 46 ist bei der Ausführungsform gemäß den Fig. 1 und 2 vollflächig ausgebildet, während sie bei der Ausführungsform gemäß den Fig. 3 und 4 eine konzentrisch zur Längsmittelachse L angeordnete Ausnehmung 47 aufweist. Die Lagerschale 45 und die Lagerplatte 46 begrenzen einen Lagerraum 48, in dem ein im Beispielsfalle einstückig am Tragzapfen 10 bzw. dessen Schaftteiles 17 angeordnetes Gleitlagerteil 49 angeordnet ist. Damit das Schaftteil 14 sich durch die Lagerschale 45 erstrecken kann, weist diese eine obere Durchtrittsöffnung 50 auf. Die Kopflager 14 der Ausführungsformen gemäß den Fig. 5 bis 8 sind als Wälzlager ausgebildet. Hierbei sind die Wälzlager gemäß den Ausführungsformen der Fig. 5, 7 und 8 als handelsübliche Kugellager ausgebildet, während das Wälzlager der Ausführungsform gemäß Fig. 6 eine im Einbauzustand untere dem Lagerdeckel 12 benachbarte Lagerschale 51 sowie eine mittlere Lagerschale 52 aufweist. Die Wälzkörper 53 und 54 sind hierbei einerseits zwischen der unteren Lagerschale 51 und der mittleren Lagerschale 52 und andererseits zwischen der mittleren Lagerschale 52 und einer Innenfläche 55 des Absatzes 15 angeordnet. Somit bildet die Innenfläche 55 die obere Lagerschale dieses Wälzlagers. Eine weitere Besonderheit dieser Ausführungsform ist es, daß die mittlere Lagerschale mit der Loch- bzw. Zahnscheibe 42 verbunden ist.

Zur Herstellung der in den Fig. 1 bis 8 gezeigten Ausführungsformen der erfindungsgemäßen Laufrolle 1 können alle zuvor beschriebenen Einzelteile vorgefertigt werden.

Zur Montage des Joches 9 wird dann der vorzugsweise gebogene Verbindungsteil 8, danach das Kopflager 14 mit dem daran bereits angebrachten Tragzapfen 10 und anschließend das Füllstück 44 in den Lagertopf 11 eingebracht. Darauf folgend wird der Lagerdeckel 12 in den Lagertopf 11 eingelegt, wonach zur Bildung des Halteabschnittes 20 der untere Rand des Lagertopfes 11 beispielsweise umgebördelt werden kann, so daß die in den Fig. 1 bis 8 dargestellte Gesamtkonfiguration des Joches 9 mit den darin angeordneten Teilen entsteht.

Nach dieser Montage kann schließlich noch das Rad 7 an den freien Enden 4 und 5 der Tragarme 2 und 3 befestigt werden.

Durch die zusätzliche Anordnung des Kopflagers 14 im Aufnahmehohlraum 13 des Joches 9 wird eine drehbewegliche Lagerung des Tragzapfens 10 gegenüber dem Joch 9 auf einfache und kostengünstig herzustellende Art und Weise erreicht.

**Patentansprüche**

1. Laufrolle (1), insbesondere Lenkrolle, für Möbel, Apparate u.dgl.
   - mit zwei Tragarmen (2, 3),
     die als Drahtbiegeteile ausgebildet sind, an deren freien Enden (4, 5) eine Radachse (6) für zumindest ein Rad (7) gehaltert ist, und die über ein Verbindungsteil (8) miteinander verbunden sind, und
   - mit einem Joch (9),
     das das Verbindungsteil (8) der Tragarme (2, 3) aufnimmt, und
     das mit einem Tragzapfen (10) verbunden ist;
     dadurch **gekennzeichnet**,
   - daß das Joch (9) einen Lagertopf (11) und einen Lagerdeckel (12) aufweist, die einen Aufnahmehohlraum (13) für ein Kopflager (14) zur drehbeweglichen Lagerung des Tragzapfens (10) begrenzen.

2. Laufrolle nach Anspruch 1, dadurch gekennzeichnet, daß das Verbindungsteil (8) kreisringförmig ausgebildet ist und das Kopflager (14) teilweise umgibt.

3. Laufrolle nach Anspruch 1 oder 2, dadurch gekennzeichnet, daß der Lagertopf (11) einen im Einbauzustand oberen Absatz (15) aufweist, in dem eine zentrische Ausnehmung (16) angeordnet ist, durch die sich ein Schaftteil (17) des Tragzapfens (10) erstreckt.

4. Laufrolle nach einem der Ansprüche 1, 2 oder 3, dadurch gekennzeichnet, daß der Lagertopf (11) einen dem Absatz (15) gegenüberliegenden Halteabschnitt (20) aufweist, der den Lagerdeckel (12) an dessen Außenrand hintergreift.

5. Laufrolle nach einem der Ansprüche 1 bis 4, dadurch gekennzeichnet, daß ein Teil (23) eines Randabschnittes (22) des Lagerdeckels (12) zwischen dem Halteabschnitt (20) des Lagertopfes (11) und dem Verbindungsteil (8) angeordnet ist.

6. Laufrolle nach Anspruch 5, dadurch gekennzeichnet, daß der Teil (23) des Randabschnittes (22) entsprechend der Außenkontur des Verbindungsteils (8) gerundet ausgebildet ist.

7. Laufrolle nach Anspruch 1 bis 6, dadurch gekennzeichnet, daß der Lagerdeckel (12) ein sich im Einbauzustand nach unten auf die Radachse (6) erstreckende Topfteil (25) aufweist, das mit einem umgebogenen im wesentlichen horizontalen Rand (26) versehen ist, in dem die Durchgriffsausnehmung (24) angeordnet ist.

8. Laufrolle nach Anspruch 7, dadurch gekennzeichnet, daß auf der Innenseite (27) des Randes (26) eine Verzahnung (28) angeordnet ist.

9. Laufrolle nach einem der Ansprüche 1 bis 8, dadurch gekennzeichnet, daß in dem Bereich des Aufnahmehohlraumes (13), in dem das Kopflager (14) nicht vom Verbindungsteil (8) umgeben ist, ein Füllstück (43) angeordnet ist.

10. Laufrolle nach Anspruch 1 bis 9, dadurch gekennzeichnet, daß das Kopflager (14) als Wälzlager ausgestattet ist und das Wälzlager eine im Einbauzustand untere Lagerschale (51) und eine mittlere Lagerschale (52) aufweist, wobei die Wälzkörper (53, 54) des Wälzlagers einerseits zwischen der unteren und mittleren Lagerschale (51 bzw. 52) und andererseits zwischen der mittleren Lagerschale (52) und einer eine obere Lagerschale bildenden Innenfläche (55) des Absatzes (15) des Lagertopfes (11) angeordnet sind.

Fig. 1

**Fig. 2**

Fig. 3

Fig. 4

Fig. 5

Fig. 6

Fig. 7

Fig. 8

Europäisches
Patentamt

**EUROPÄISCHER
RECHERCHENBERICHT**

Nummer der Anmeldung

**EP 91 10 1281**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-2 923 961 (BLACK)<br>* Spalte 3, Zeile 45 - Spalte 6, Zeile 16; Figuren 1-6 *<br>— — — | 1,2 | B 60 B 33/00 |
| X | DE-U-8 914 431 (AS HANDELSGESELSCHAFT)<br>* Seite 7, Zeile 31 - Seite 10, Zeile 17; Figuren 3-10 *<br>— — — | 1,2,3,8,10 | |
| Y | FR-A-1 431 811 (BERTRAND FAURE)<br>* Seite 1, rechte Spalte, Zeilen 5 - 31; Figuren 1-3 *<br>— — — | 1,2,3 | |
| Y | US-A-2 369 609 (SANDBERG)<br>* das ganze Dokument *<br>— — — | 1,2,3 | |
| A | DE-A-2 908 813 (DORNIER)<br>* Seite 7, Zeile 3 - Seite 8, Zeile 6; Figuren 2, 3 *<br>— — — | 1 | |
| A | US-A-2 980 944 (BOLINGER)<br>* Spalte 2, Zeilen 36 - 69; Figur 2 *<br>— — — — | 1,10 | |

| RECHERCHIERTE SACHGEBIETE (Int. Cl.5) |
|---|
| B 60 B |

**Der vorliegende Recherchenbericht wurde für alle Patentansprüche erstellt**

| Recherchenort | Abschlußdatum der Recherche | Prüfer |
|---|---|---|
| Den Haag | 14 Mai 91 | AYITER I. |